Europäisches Patentamt

European Patent Office

Office européen des brevets

(11) Publication number: **0 092 950**
**B1**

(12)

# EUROPEAN PATENT SPECIFICATION

(45) Date of publication of patent specification: **23.07.86**

(51) Int. Cl.⁴: **B 60 K 41/02**

(21) Application number: **83302164.5**

(22) Date of filing: **18.04.83**

(54) Automotive vehicle power transmission clutch control system.

(30) Priority: **28.04.82 GB 8212332**

(43) Date of publication of application:
**02.11.83 Bulletin 83/44**

(45) Publication of the grant of the patent:
**23.07.86 Bulletin 86/30**

(84) Designated Contracting States:
**BE DE FR IT NL SE**

(56) References cited:
**DE-A-1 505 452**
**FR-A-2 374 177**
**GB-A-2 012 892**
**US-A-3 215 234**

(73) Proprietor: **LUCAS INDUSTRIES public limited company**
**Great King Street**
**Birmingham, B19 2XF West Midlands (GB)**

(72) Inventor: **Harris, Paul Anthony**
**38 Heath Close Stonnall**
**Brownhills Staffordshire (GB)**
Inventor: **Toller, Andrew Peter**
**101 Union Road Shirley**
**Solihull West Midlands B90 3BZ (GB)**

(74) Representative: **Prutton, Roger et al**
**Marks & Clerk Alpha Tower Suffolk Street**
**Queensway**
**Birmingham B1 1TT (GB)**

Courier Press, Leamington Spa, England.

## Description

This invention relates to a power transmission clutch control system which is intended to be used to control a clutch in an automatic transmission system. The engine of the vehicle is controlled by an accelerator pedal and no clutch pedal is provided.

With such an arrangement it is necessary to control the engagement force of the clutch during starting to ensure smooth acceleration of the vehicle without stalling the engine. It has previously been proposed (e.g. in GB—A—2 012 892) to vary the clutch engagement force in accordance with a signal which represents the weighted sum of a throttle position signal minus an engine speed signal and minus a rate of change of engine speed signal. With this arrangement, when the weighted sum of the engine speed signal and the rate of change of engine speed signal is less than the weighted throttle position signal the clutch engagement force is reduced, whereas when the weighted sum is more than the weighted throttle position signal the clutch engagement force is increased.

It has been found that clutch control based on this principle is unsatisfactory since the engine operating characteristics vary significantly with such factors as ambient temperature, humidity, the accuracy of ignition timing and fuel composition so that a set of weightings chosen for one set of these factors may be unsuitable for operation when the conditions change. This problem could theoretically be overcome by monitoring all the factors which affect the engine characteristics and modifying the weightings accordingly but a very complicated and expensive control system with a large number of transducers requiring accurate calibration would be needed.

The present invention has as its object to provide a clutch control system in which the problems are overcome without introducing excessive complication in the control.

In GB—A—2 012 892 a clutch control system engine speed transducer means, according to the pre-characterising part of claim 1 is disclosed, including throttle pedal position transducer means and a control circuit which receives inputs from both said transducer means and generates a clutch control signal. According to the invention the control system is characterised in that the clutch control signal varies non-linearly with the throttle pedal position such that the clutch engagement force for a given speed is increased from zero to a maximum as the throttle is opened and then reduced as the throttle is opened further, the clutch control signal being independent of engine speed when the latter is between upper and lower limit levels, but being changed in accordance with speed to increase clutch engagement force with increasing speed above the upper limit level and to decrease clutch engagement force with decreasing speed below the lower limit level.

During clutch engagement operation the degree of clutch engagement force is normally independent of engine speed so that the torque transmitted is a non-linear function of throttle position. If the load conditions are such as to cause the engine speed to fall below the lower limit level, when there would be a risk of stalling, the clutch is released, allowing engine speed to recover. If the load is light and the engine speed rises above the upper limit level, the clutch engagement force is increased to keep the engine speed down. Thus the control operates open loop provided the engine speed is between the limit levels, but a speed loop is closed outside the limit levels.

An example of the invention is shown in the accompanying drawings in which:—

Figure 1 is a block diagram of a clutch control system;

Figure 2 is a flow sheet of a programme main routine used in a microcomputer forming a part of the system;

Figure 3 is a flow sheet of a speed interrupt routine of the programme (two such interrupt routines being included);

Figure 4 is a graph showing the relationship between throttle angle (α) and clutch engagement force demand F (α); and

Figure 5 is a graph showing the relationship between engine speed N and clutch engagement force demand adjustment F(N).

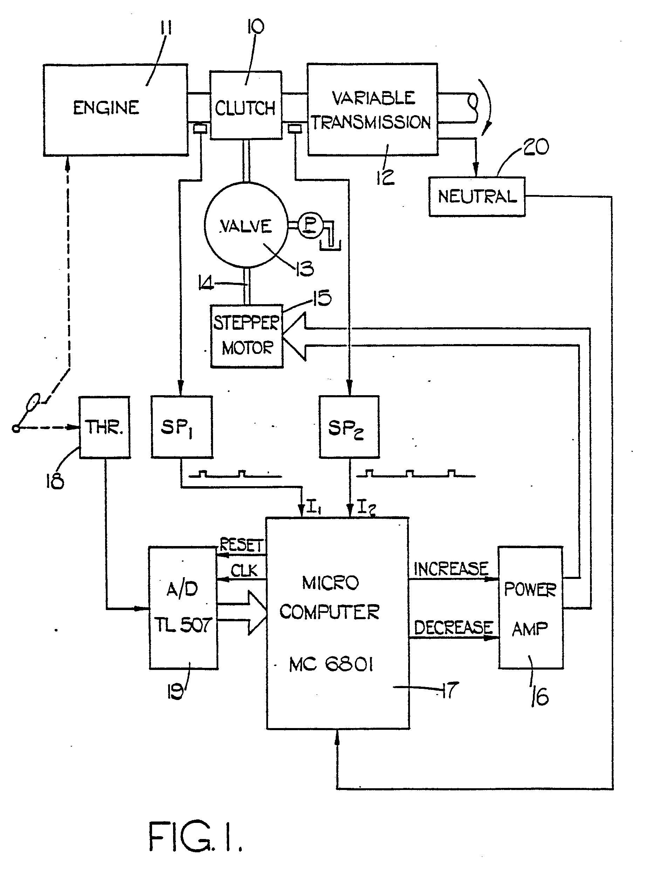

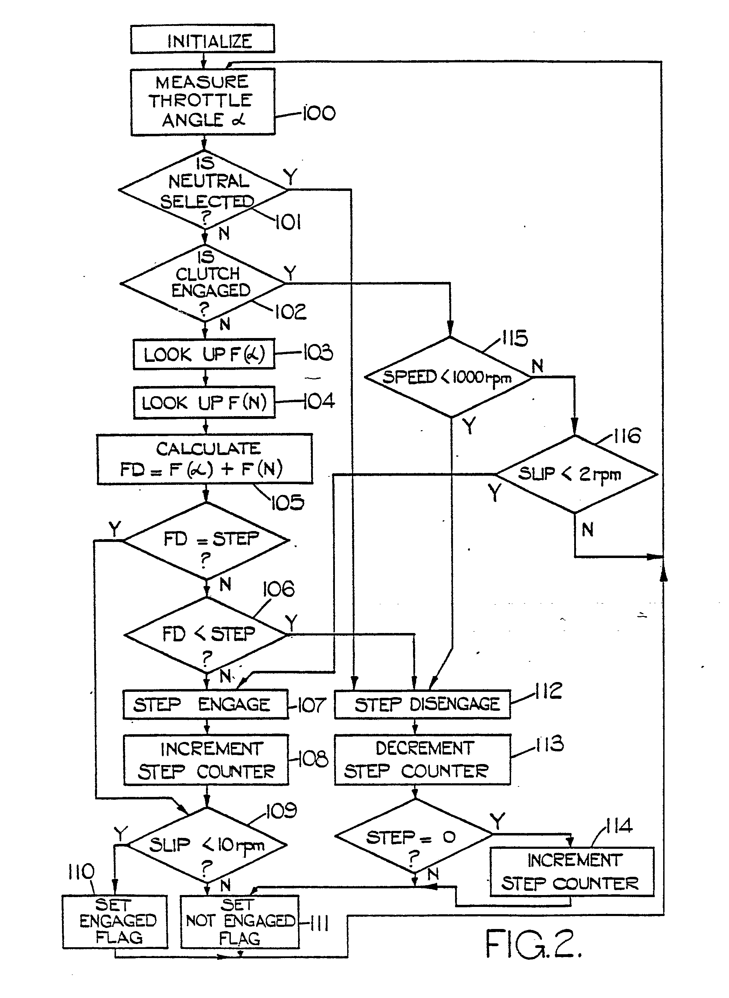

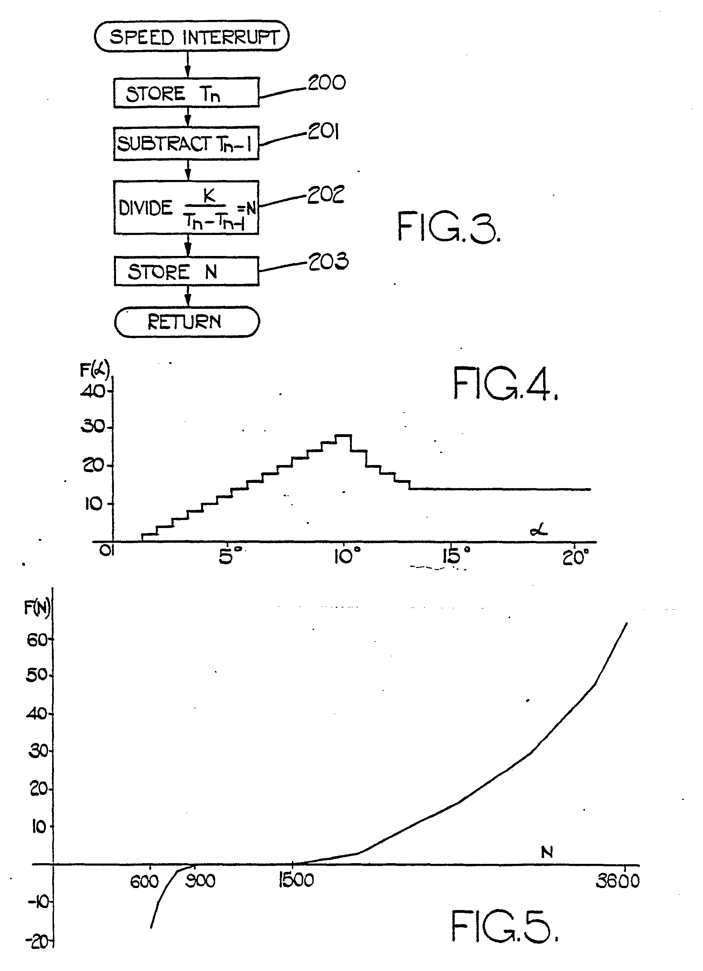

Referring firstly to Figure 1, it will be noted that a clutch 10 is interposed between an engine 11 and a variable transmission 12 the operation of which forms no part of the present invention. The clutch is of the wet-plate type which is hydraulically operated, the torque transmitted being directly proportional to the hydraulic pressure applied. The clutch is controlled by a servo valve 13 which regulates the pressure in accordance with the position of a mechanical input member 14 movable by an electrical stepper motor 15. The travel of the number 15 is mechanically limited and the valve has a pressure characteristic such that the output pressure is zero over an initial travel from one limit stop and then increases linearly with travel. The total travel amounts to 127 steps of the stepper motor 15.

The stepper motor 15 is controlled by a microcomputer 17 (e.g. a Motorola Inc., microcomputer type MC 6801) through the intermediary of a conventional stepper motor control/power amplifier circuit 16 which receives one pulse from the microprocessor for each required step, at one of two inputs depending on the direction of movement required.

The microcomputer receives inputs from two transducers SP1 and SP2 sensing the speeds of the engine shaft and the clutch output shaft. Each transducer provides a pulse train of frequency proportional to the speed of the associated shaft in known manner. These pulse trains are applied to two interrupt input terminals $I_1$ and $I_2$ of the microcomputer 17. The microcomputer is also interfaced with a throttle position transducer 18, in the form of a potentiometer, through the intermediary of a successive approximation analog-to-digital converter 19 which may be a Texas Instruments type TL507. There is also an input to the microcomputer from a switch 20 which indicates when neutral has been selected.

The main routine of the programme of the microprocessor 17 is shown in Figure 2 and commences each cycle by measuring (100) the throttle angle. The sub-routine required for the analog-to-digital conversion is conventional and will not be described in detail. The programme then checks (101) whether neutral has been selected (switch 20) and, if not checks (102) whether a clutch engaged flag is set to ENGAGED. If not, a value $F(\alpha)$ is looked up (103) in a tale containing values of $F(\alpha)$ for values of $\alpha$ (the throttle angle) which provides an $F(\alpha)$ characteristic as shown in Figure 4 $F(\alpha)$ having a maximum value of 32. Then, $F(N)$ is looked up (104) for the existing value of the engine speed N, Figure 5 showing the contents of this look-up table in graphical form. The terms $F(\alpha)$ and $F(N)$ are next added together (105) and the sum FD (which corresponds to the demanded position of member 14) is compared (106) with the content of a step counter. If FD is greater than the step count an "engage" step output is delivered (107) to the amplifier 16, and the step count is incremented (108) by one. Next the slip is calculated by subtracting the clutch stored output speed from the stored engine speed N and is compared (109) with a fixed lower limit value (10 r.p.m.). If the step is less than this value the clutch engaged flag (110) is set up to ENGAGED. If not this flag is set (111) to NOT ENGAGED. In either case the programme returns to the start of the main routine. If FD is equal to the step count the programme misses steps 106, 107 and 108 and proceeds directly to step 109.

If decision 106 reveals that the demand FD is less than the existing step count a "disengage" step output is delivered (112) and the step counted is decremented by one (113). If the step count is now equal to zero it is not incremented by one (114) and step (111) is carried out. If the step count is not zero step 111 is carried out directly.

When decision 101 reveals that neutral has been selected the programme jumps to step 112. When decision 102 reveals that the clutch engaged flag is set to ENGAGED the programme jumps to a decision 115 as to whether the engine speed N is less than 1000 rpm. If so the programme goes on to step 112. If not the slip is compared (116) with 2 r.p.m. If slip is high the programme proceeds to step 107. If not it returns to step 100.

The main programme described above is repeated every 10 mS.

Figure 3 shows the interrupt routine which is used to determine and store the value of N. When a pulse arrives from the appropriate speed transducer, the time $T_n$ registered on the microcomputer's internal clock is stored (200) and the previously stored time $T_{n-1}$ is then subtracted (201) and the the resulting interval $T_n - T_{n-1}$ is used

(202) to calculate N by dividing a constant K by $T_n - T_{n-1}$. The resulting value of N is stored (203) preparatory to being called up in the main programme routine.

It will be seen that control of clutch engagement is independent of engine speed in the range between idle (900 rpm) and 1500 rpm, i.e. $F(N) = 0$ in this range. Below the range the value of $F(N)$ becomes negative, reaching a maximum negative value at about 600 rpm. Above 1500 rpm the value $F(N)$ is positive, reaching a maximum value at 3600 rpm. The values of $F(\alpha)$ and $F(N)$ are, of course, stored in digital form in the ROM of the microprocessor and graphs like Figures 4 and 5 produced from the stored data values have a stepped, rather than curved configuration. Figure 4 is shown stepped, but Figure 5 is shown as a curve.

Within the idle to 1500 rpm range, control of clutch engagement is a function of throttle pedal position only. The use of a stepper motor which can only take one step per cycle of the programme limits the slew rate of clutch engagement and ensures stability. If the driver presses the accelerator pedal down smoothly the programme will track the changes in throttle position and adjust the degree of clutch engagement accordingly. A step change in throttle position will cause the clutch engagement to change at its maximum slew rate.

The reduction in engagement caused by the negative values of $F(N)$ at speeds less than idle ensures that the engine cannot be stalled, whilst, the positive values of $F(N)$ above 1500 rpm ensure that clutch engagement is increased as the engine speeds up — excessive slip being thereby avoided.

## Claims

1. A power transmission clutch control system for an engine driven vehicle comprising engine speed transducer means ($SP_1$, $SP_2$), throttle pedal position transducer means (18) and a control circuit (17) which receives inputs from both said transducer means and generates a clutch control signal, characterised in that the clutch control signal varies non-linearly with the throttle pedal position such that the clutch engagement force for a given engine speed is increased from zero to a maximum as the throttle is opened and then reduced as the throttle is opened further, the clutch control signal being independent of engine speed when the latter is between upper and lower limit levels, but being changed in accordance with speed to increase clutch engagement force with increasing speed above the upper limit level and to decrease clutch engagement force with decreasing speed below the lower limit level.

2. A power transmission clutch control system as claimed in claim 1 in which said control circuit comprises micro-computer means (17) incorporating stored data relating the value of the clutch control signal to the throttle pedal position transducer means output and further stored data relating the value of a speed dependent correction signal to the engine speed transducer output, said micro-computer means operating to calculate a corrected clutch control signal and to control the clutch in accordance with such signal.

3. A power transmission clutch control system as claimed in claim 2 further comprising a stepper motor (15) which is mechanically connected to the clutch (10) for the control thereof, and which is electrically connected to said micro-computer means (17) which provides pulsed signals for stepping the motor.

## Patentansprüche

1. Steuersystem für die Kupplung der Kraftübertragung eines Kraftfahrzeugs mit
— einer Drehzahlwandlereinrichtung (SP₁, SP₂),
— einer Gaspedalpositionswandlereinrichtung (18), und
— einer Steuerschaltung (17), die von den Wandlereinrichtungen Eingangssignale empfängt und ein Kupplungssteuersignal erzeugt, dadurch gekennzeichnet, daß das Kupplungssteuersignal sich nichtlinear mit der Gaspedalposition so ändert, daß die Kupplungseinrückkraft für eine gegebene Motordrehzahl, sobald die Drosselklappe geöffnet ist, von Null bis zu einem Maximum anwächst und dann bei weiterer ·Öffnung der Drosselklappe reduziert wird und daß das Kupplungssteuersignal unabhängig von der Motordrehzahl ist, wenn diese zwischen einem oberen und unteren Grenzwert liegt, jedoch drehzahlabhängig zur Erhöhung der Kupplungseinrückkraft bei über den oberen Grenzwert anwachsender Drehzahl und zur Verringerung der Kupplungseinrückkraft bei unter den unteren Grenzwert abfallender Drehzahl geändert wird.

2. Steuersystem nach Anspruch 1, dadurch gekennzeichnet, daß die Steuerschaltung einen Mikrocomputer (17) aufweist, der Daten speichert, die den Wert der Kupplungssteuersignale auf die Gaspedalpositions-Steuereinrichtungsausgänge beziehen und weitere Daten speichert, die den Wert eines drehzahlabhängigen Korrektursignals auf die Maschinendrehzahlwandlerausgangssignale beziehen, wobei der Mikrocomputer ein korrigiertes Kupplungssteuersignal berechnet und die Kupplung nach Maßgabe dieses Signals steuert.

3. Steuersystem nach Anspruch 2, dadurch gekennzeichnet, daß weiterhin ein Schrittschaltmotor (15) vorgesehen ist, der mechanisch mit der Kupplung (10), um diese zu steuern, verbunden ist und der elektrisch mit dem Mikrocomputer (17) verbunden ist, der Impulssignale erzeugt, die den Schrittschaltbetrieb des Motors bewirken.

## Revendications

1. Système de commande de l'embrayage de transmission de la force motrice pour un véhicule mû par un moteur, comprenant un dispositif transducteur de la vitesse du moteur (SP₁, SP₂), un dispositif transducteur de la position de la pédale d'accélérateur (18) et un circuit de commande (17) qui reçoit des signaux d'entrée des deux dispositifs transducteurs et produit un signal de commande d'embrayage, caractérisé en ce que le signal de commande d'embrayage varie de façon non linéaire avec la position de la pédale d'accélérateur, de manière que la force d'embrayage ou force d'accouplement de l'embrayage pour une vitesse donnée du moteur soit augmentée de zéro à un maximum lorsque le papillon d'admission des gaz est ouvert et soit ensuite réduite lorsque le papillon est ouvert davantage, le signal de commande d'embrayage étant indépendant de la vitesse du moteur lorsque cette vitesse est comprise entre des niveaux limites supérieur et inférieur, mais étant changé selon la vitesse pour augmenter la force d'embrayage lorsque la vitesse augmente au-dessus du niveau limite supérieur et pour diminuer la force d'embrayage lorsque la vitesse diminue au-dessous du niveau limite inférieur.

2. Système de commande d'embrayage selon la revendication 1, dans lequel le circuit de commande comprend un micro-ordinateur (17) contenant des informations mémorisées définissant la relation entre la valeur du signal de commande d'embrayage et le signal de sortie du dispositif transducteur de la position de la pédale d'accélérateur, de même que d'autres informations mémorisées définissant la relation entre la valeur d'un de correction dépendant de la vitesse et le signal de sortie du transducteur de la vitesse du moteur, le micro-ordinateur calculant un signal de commande d'embrayage corrigé et commandant l'embrayage selon ce signal.

3. Système de commande d'embrayage selon la revendication 2, comprenant en outre un moteur pas-à-pas (15) qui est relié mécaniquement à l'embrayage (10) en vue de la commande de celui-ci et qui est connecté électriquement au micro-ordinateur (17), lequel fournit des signaux pulsés pour la commande pas à pas du moteur.

FIG.1.

FIG.2.

SPEED INTERRUPT

STORE $T_n$ — 200

SUBTRACT $T_n-1$ — 201

DIVIDE $\dfrac{K}{T_n - T_{n-1}} = N$ — 202

STORE N — 203

RETURN

FIG.3.

FIG.4.

FIG.5.

3